# EUROPEAN PATENT APPLICATION

(11) **EP 3 239 912 A1**
(43) Date of publication of application: **01.11.2017**
(21) Application number: 17167185.2
(22) Date of filing: 20.04.2017
(51) Int. Cl.: G06Q 20/20, G07G 1/00, G06Q 20/40

(54) **MANAGEMENT DEVICE AND METHOD**

(30) Priority: 28.04.2016 JP 2016090108
(71) Applicant: Toshiba TEC Kabushiki Kaisha, Tokyo 141-0032 (JP)
(72) Inventor: YOKOYAMA, Yukiko, Shinagawa-ku, Tokyo 141-8562 (JP); TAKAHASHI, Nobuyuki, Shinagawa-ku, Tokyo 141-8562 (JP)
(74) Representative: Takeuchi, Maya

(57) **Abstract**

A managing unit correlates and manages a first captured image with an accounting device identifier of one accounting device designated so as to perform accounting processing of the registered commodity among accounting device identifiers for respectively identifying a plurality of accounting devices. The first captured image is a customer who asks a sales clerk operating a registration device to register a commodity. The specifying unit compares a second captured image of a customer who operates the accounting device to each first captured image, and specifies the first captured image, when the accounting device starts the accounting processing. The determining unit determines whether an accounting device identifer corresponding to the first captured image coincides with an accounting device identifier of the accounting device operated by the customer included in the second captured image. The control unit inhibits the accounting processing which is performed in the accounting device operated by the customer, under a condition that the determining unit determines the identifiers not to coincide.

## Description

### FIELD

The present invention relates to the technologies concerning a Point-Of-Sale (POS) terminal in general, and embodiments described herein relate more particularly to a management device or system and a management method.

### BACKGROUND

In the related art, in a store such as a supermarket, a sales clerk operates a Point-Of-Sale (POS) terminal, so as to perform registration and accounting of commodities. In the store, a checkout method which is referred to as, for example, a semi-self checkout type is also used. In the semi-self checkout type, a sales clerk registers commodities and a customer performs accounting of the commodities. In the semi-self checkout type, a device (registration device) configured to register a commodity and a device (accounting device) configured to perform accounting of the commodity are separated from each other. A customer who completes registration of a commodity in the registration device moves to the accounting device and performs accounting.

As an aspect of the semi-self checkout type, a registration device or a sales clerk who operates the registration device selects (designates) one accounting device among a plurality of accounting devices, and transmits accounting information regarding accounting of a commodity registered in the accounting device. In this case, a customer who finishes registration of a commodity moves to an accounting device designated from a sales clerk, and performs accounting based on accounting information which is previously transmitted.

However, in the semi-self checkout type having the above-described embodiment, if a customer moves to an accounting device which is different from the designated accounting device, accounting may be performed with erroneous accounting information. Thus, a technology which can prevent an occurrence of a situation in which accounting is performed when a customer moves to an erroneous accounting device is desired.

To this end, there is provided a management device, comprising:
managing means for correlating and managing a first captured image with an accounting device identifier of one accounting device designated so as to perform accounting processing of a registered commodity among accounting device identifiers for respectively identifying a plurality of accounting devices, the first captured image comprising an image of a customer who asks a sales clerk operating a registration device to register a commodity;
specifying means for comparing a second captured image comprising an image of a customer who operates the accounting device to each first captured image managed by the managing means, and specifying the first captured image including an image of the customer who is the same as the customer of whom an image is included in the second captured image, when the accounting device starts the accounting processing;
determining means for determining whether an accounting device identifier corresponding to the first captured image which is specified by the specifying means coincides with an accounting device identifier of the accounting device operated by the customer of whom an image is included in the second captured image; and
control means for inhibiting the accounting processing which is performed in the accounting device operated by the customer of whom an image is included in the second captured image, under a condition that the determining means determines the identifiers not to coincide.

Preferably, the control means notifies the accounting device operated by the customer of whom an image is included in the second captured image of the accounting device identifier corresponding to the first captured image which is specified by the specifying means, under the condition that the determining means determines the identifiers not to coincide.

Preferably still, the control means inhibits the accounting processing performed in the accounting device operated by the customer of whom an image is included in the second captured image, under a condition that the specifying means is not able to specify the first captured image.

Preferably yet, the control means causes the accounting device operated by the customer of whom an image is included in the second captured image to perform the accounting processing, under the condition that the determining means determines the identifiers to coincide.

Suitably, the managing means correlates and manages an accounting identifier for identifying accounting of the customer of whom an image is included in the first captured image, with the first captured image and the accounting device identifier, and
the control means notifies the accounting device operated by the customer of whom an image is included in the second captured image, of the accounting identifier corresponding to the first captured image which is specified by the specifying means, under the condition that the determining means determines the identifiers to coincide.

Suitably still, the device further comprises:
a first camera for obtaining the first captured image.

Suitably yet, the device further comprises a second camera for obtaining the second captured image.

Suitably further, the determining means uses facial recognition.

The invention also relates to a management method comprising:
managing a first captured image in correlation with an accounting device identifier of one accounting device designated so as to perform accounting processing of a registered commodity among accounting device identifiers for respectively identifying a plurality of accounting devices, the first captured image comprising an image of a customer who asks a sales clerk operating a registration device to register a commodity;
comparing a second captured image comprising an image of a customer who operates the accounting device to each first captured image managed in the managing, and specifying the first captured image including an image of the customer who is the same as the customer of whom an image is included in the second captured image, when the accounting device starts the accounting processing;
determining whether an accounting device identifier corresponding to the first captured image which is specified in the specifying coincides with an accounting device identifier of the accounting device operated by the customer of whom an image is included in the second captured image; and
inhibiting the accounting processing which is performed in the accounting device operated by the customer of whom an image is included in the second captured image, under a condition that the identifiers are determined not to coincide in the determining.

Preferably, the method further comprises:
notifying the accounting device operated by the customer of whom an image is included in the second captured image of the accounting device identifier corresponding to the first captured image which is specified by the specifying means, under the condition that the determining means determines the identifiers not to coincide.

Preferably still, the method further comprises:
inhibitting the accounting processing performed in the accounting device operated by the customer of whom an image is included in the second captured image, under a condition that the specifying means is not able to specify the first captured image.

Preferably yet, the method further comprises:
causing the accounting device operated by the customer of whom an image is included in the second captured image to perform the accounting processing, under the condition that the determining means determines the identifiers to coincide.

Suitably, the method further comprises:
correlating and managing an accounting identifier for identifying accounting of the customer of whom an image is included in the first captured image, with the first captured image and the accounting device identifier, and
notifying the accounting device operated by the customer of whom an image is included in the second captured image, of the accounting identifier corresponding to the first captured image which is specified by the specifying means, under the condition that the determining means determines the identifiers to coincide.

The invention further relates to z management system, comprising:
at least one image capture component;
at least one POS terminal; and
the management device as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram illustrating an example of a store layout according to an embodiment.
FIG. 2 is a schematic diagram illustrating an example of a configuration of a checkout system according to the embodiment.
FIG. 3 is a diagram illustrating an example of a configuration of a registration device according to the embodiment.
FIG. 4 is a flowchart illustrating an example of processing performed by the registration device in the embodiment.
FIG. 5 is a diagram illustrating an example of a configuration of an accounting device according to the embodiment.
FIG. 6 is a flowchart illustrating an example of processing performed by the accounting device in the embodiment.
FIG. 7 is a diagram illustrating an example of a report screen.
FIG. 8 is a diagram illustrating an example of a configuration of a management server according to the embodiment.
FIG. 9 is a diagram illustrating an example of a data structure of a management table.
FIG. 10 is a flowchart illustrating an example of processing performed by the management server in the embodiment.

### DETAILED DESCRIPTION

An object of the embodiment is to provide a management device and a management method which can prevent an occurrence of a situation in which accounting is performed in another accounting device except for the designated accounting device.

In general, according to one embodiment, a management device includes managing means for correlating and managing a first captured image with an accounting device identifier of one accounting device designated so as to perform accounting processing of the registered commodity among accounting device identifiers for respectively identifying a plurality of accounting devices, the first captured image being obtained by capturing an image of a customer who asks a sales clerk operating a registration device to register a commodity, specifying means for comparing a second captured image obtained by capturing an image of a customer who operates the accounting device to each first captured image managed by the managing means, and specifying the first captured image including an image of a customer who is the same as a customer of whom an image is included in the second captured image, when the accounting device starts the accounting processing, determining means for determining whether an accounting device identifier corresponding to the first captured image which is specified by the specifying means coincides with an accounting device identifier of the accounting device operated by the customer of whom an image is included in the second captured image, and control means for inhibiting the accounting processing which is performed in the accounting device operated by the customer of whom an image is included in the second captured image, under a condition that the determining means determines the identifiers not to coincide.

A management device and a method according to an embodiment will be described below in detail with respect to the accompanying drawings. In the following embodiments, an example in which the embodiments are applied to a store such as a supermarket will be described. However, the invention is not limited to the embodiment.

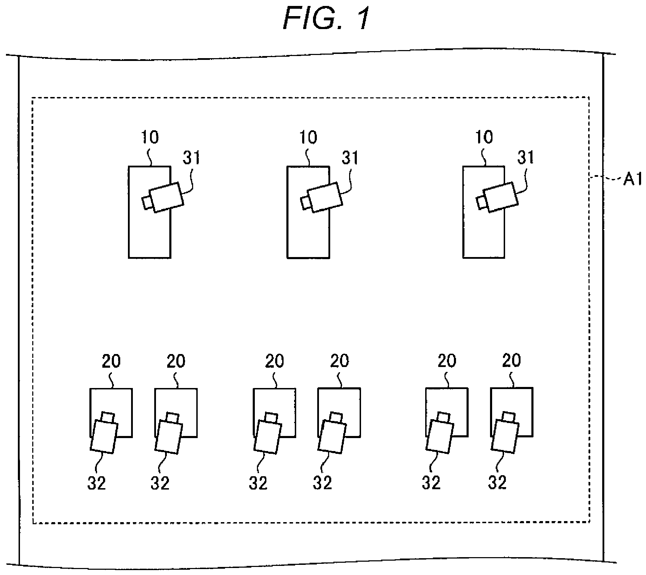

FIG. 1 is a schematic diagram illustrating an example of a store layout according to an embodiment. As illustrated in Fig. 1, a store includes a registration device 10 and an accounting device 20 in a checkout region A1 which relates to registration and accounting of commodities.

The registration device 10 is operated by a sales clerk, so as to perform registration processing of a commodity to be purchased by a customer, The accounting device 20 is operated by a customer, so as to perform accounting processing of a commodity registered by the registration device 10. That is, the registration device 10 and the accounting device 20 realize a checkout (registration and accounting) method which is referred to as, for example, a semi-self checkout type. The number of registration devices 10 and accounting devices 20 are not particularly limited. From a viewpoint of efficiency, it is preferably assumed that the number of accounting devices 20 is equal to or more than the number of registration devices 10.

In the layout in FIG, 1, a customer who purchases a commodity puts the commodity into, for example, a shopping basket, and moves to the registration device 10. A sales clerk in the registration device 10 causes a reading unit 14 (which will be described later) to read a bar code attached to the commodity, and thus sequentially registers commodities. If registration of commodities is completed, one empty accounting device 20 is selected (designated). The selection (designation) is automatically performed by the registration device 10 or is manually performed by a sales clerk who operates the registration device 10. If an accounting device 20 is designated, the registration device 10 transmits accounting information to the designated accounting device 20. The accounting information includes price and the like of each of the registered commodities. The sales clerk informs the customer of the designated accounting device 20 as an accounting destination.

If registration in the registration device 10 is completed, the customer moves the commodities (shopping basket) to the accounting device 20 designated by the sales clerk. The customer operates the accounting device 20, and thus accounting processing is performed based on the accounting information which is previously transmitted. In this manner, in the semi-self checkout type, it is possible to perform division into registration and accounting. Thus, it is possible to achieve improvement of efficiency in processing, for example, reduction of a time to wait at a register.

However, in the above-described semi-self checkout type, if a customer moves to an accounting device 20 which is different from the designated accounting device 20, accounting processing may be performed with erroneous accounting information. In a store in the embodiment, in a checkout system (management server 40) (which will be described later), an occurrence of a situation in which accounting is performed with erroneous accounting information when a customer moves an accounting device 20 different from the designated accounting device 20 is suppressed. The checkout system according to the embodiment will be described below.

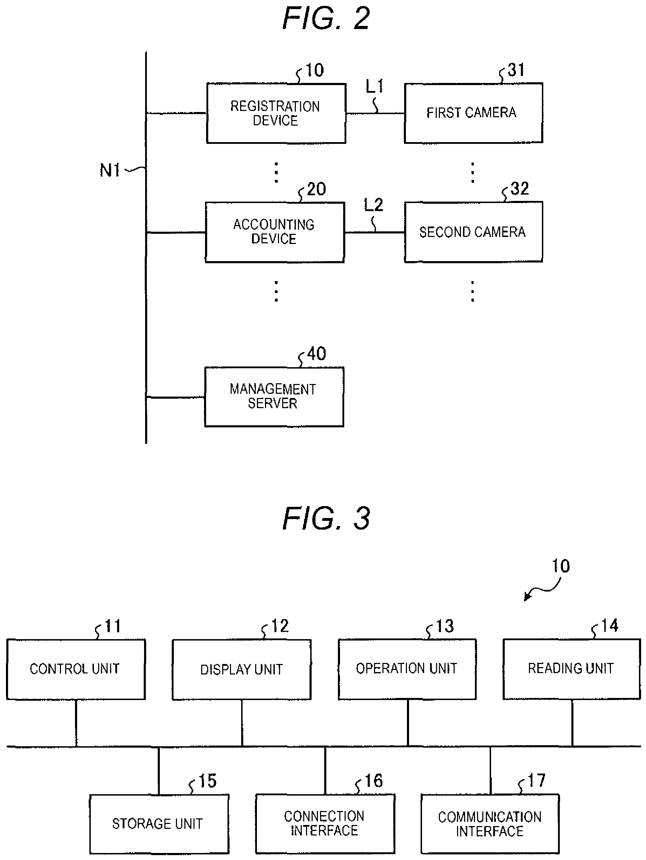

FIG. 2 is a schematic diagram illustrating an example of a configuration of the checkout system. As illustrated in FIG. 2, the checkout system includes a first camera 31, a second camera 32, and the management server 40 along with the registration device 10 and the accounting device 20 which are described above. The registration device 10, the accounting device 20, and the management server 40 are connected to a network N1 such as the Intranet.

The first camera 31 is an image capturing device for capturing an image of a customer who asks a sales clerk operating the registration device 10 to register a commodity. The first camera 31 is provided in each registration device 10 (see FIG. 1). More preferably, the first camera 31 is provided at a position allowing an image of a face of the customer to be captured, in each registration device 10. The registration device 10 and the first camera 31 are connected to each other by using a connection line L1. The position at which the first camera 31 is disposed is not particularly limited. The first camera 31 may be provided to be integrated with the registration device 10 or may be provided in, for example, the ceiling of the store in a form of a monitoring camera, and the like.

The registration device 10 is a commodity data processing device configured to perform registration processing of a commodity in accordance with an operation of a sales clerk. The registration device 10 cooperates with the first camera 31, so as to transmit a captured image (referred to as a first captured image below) obtained during registration processing, to the management server 40. The captured image includes a still image and a moving image.

FIG. 3 is a diagram illustrating an example of a configuration of the registration device 10. As illustrated in FIG. 3, the registration device 10 includes a control unit 11. The control unit 11 has computer components such as a central processing unit (CPU), a system-on-a-chip (SoC), a read only memory (ROM), and a random access memory (RAM).

A display unit 12, an operation unit 13, the reading unit 14, a storage unit 15, a connection interface 16, a communication interface 17, and the like are connected to the control unit 11 through a bus, for example.

The display unit 12 has a display device such as a liquid crystal display. The display unit 12 displays various types of information such as a commodity name or a commodity code of a registered commodity, under control of the control unit 11. The operation unit 13 includes various types of operation keys or pointing devices. The operation unit 13 receives an operation of an operator (sales clerk). For example, the operation unit 13 includes an operation key for an instruction to start or end registration, and numeric keys for inputting, for example, a commodity code or the number of pieces of a commodity. The operation unit 13 may be a touch panel provided on a display surface of the display unit 12.

The reading unit 14 is a code reader configured to enable reading of a code symbol such as a bar code or a two-dimensional code. For example, the reading unit 14 reads a commodity code which is held in a code symbol attached to a commodity, from the code symbol. Here, it is assumed that the commodity code corresponds to identification information for identifying a commodity, and individual identification information is assigned to a commodity on a per commodity type basis.

The storage unit 15 is a storage device such as a hard disk drive (HDD) or a flash memory. The storage unit 15 stores a program executed by the control unit 11 and various types of data used when the program is executed. For example, the storage unit 15 stores a commodity master (not illustrated) in advance. In the commodity master, a commodity code of each commodity is correlated with commodity information including a commodity name, unit price, and the like of a commodity. The storage unit 15 may store a face image of each sales clerk or feature information in advance, in order to distinguish the face of a sales clerk from the face of a customer. The feature information is extracted from the face image of each sales clerk.

The connection interface 16 is an interface which is connectable to the first camera 31. The connection interface 16 receives a first captured image input from the first camera 31. The communication interface 17 is a communication interface which is connectable to the network N1. The communication interface 17 transmits and receives various types of information to and from an external device (for example, accounting device 20 and management server 40) which is connected to the network N1.

In the registration device 10 having the above configuration, if a sales clerk operates the reading unit 14 to read a code symbol attached to a commodity, the control unit 11 stores a commodity code input from the reading unit 14, in the RAM and the like. Thus, the commodity is registered. If the number of pieces of a commodity is input, the control unit 11 registers the input number of pieces thereof in correlation with the commodity code. The control unit 11 acquires a first captured image obtained by capturing of the first camera 31, during a period in which registration processing of a commodity relating to one transaction is performed.

If registration of a commodity corresponding to one transaction is completed, the control unit I generates accounting information based on commodity codes and the number of pieces which are registered until registration is completed. Here, the accounting information includes, for example, a commodity name or price of each commodity (commodity code), and the total payment. The accounting information includes a journal ID. The journal ID corresponds to an accounting identifier which allows distinguishment from other pieces of accounting information at once. The journal ID is assigned by the control unit 11. It is assumed that the commodity name or price of each commodity is acquired based on commodity information which is registered in a commodity master.

If a specific accounting device 20 is selected (designated) by a sales clerk through the operation unit 13 and the like, the control unit 11 transmits accounting information to the selected (designated) accounting device 20. The control unit 11 transmits registration information to the management server 40. The registration information includes a first captured image acquired during the registration processing, an accounting device ID of the designated accounting device 20, and a journal ID included in the accounting information. Here, the accounting device ID corresponds to an accounting device identifier which allows identifying of each accounting device 20. It is assumed that the number of first captured images (still images) or the number of frames (moving images) which are transmitted to the management server 40 are not particularly limited.

The first captured image is set as a reference image used when the same customer is identified (recognized) in processing which will be described later. Thus, it is preferable that the control unit 11 transmits the first captured image obtained by capturing an image of a distinctive portion of the face and the like of a customer, to the management server 40. For example, the control unit 11 may select a first captured image which is to be transmitted to the management server 40, among first captured images obtained during the registration processing, based on a face area, a frequency of the face of the same person showing, and the like. Processing relating to selection of a first captured image will be described below.

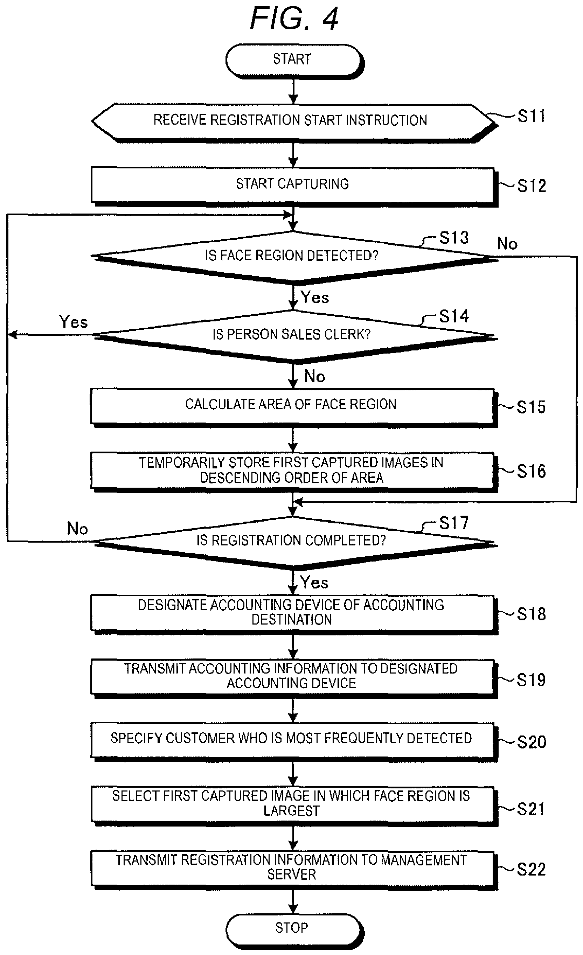

FIG. 4 is a flowchart illustrating an example of processing performed by the registration device 10. This processing is performed in the background of the registration processing. It is assumed that a well-known technology is used as a technology regarding face detection, facial recognition, and the like, in this processing.

Firstly, if an instruction to start registration is received through the operation unit 13 and the like (Act 11), the control unit 11 causes the first camera 31 to start image capturing (Act 12).

The control unit 11 determines whether or not a face region indicating a face is detected from a first captured image input from the first camera 31 (Act 13). When detection of the face region from the first captured image is not possible (Act 13; No), the control unit 11 causes the process to proceed to Act 17. If the face region is detected from the first captured image (Act 13; Yes), the control unit 11 compares features of the detected face region to features of the face of each sales clerk, which is stored in the storage unit 15, so as to determine whether or not a person of whom an image is captured is a sales clerk (Act 14).

When the person of whom an image is captured is a sales clerk (Act 14; Yes), the control unit 11 causes the process to return to Act 13. When the person of whom an image is captured is not a sales clerk, that is, in a case of a customer (Act 14; No), the control unit 11 calculates the area of the face region (Act 15), and temporarily stores first captured images in the RAM and the like, in a descending order (or an ascending order) of the area (Act 16).

The control unit 11 determines whether or not an instruction to complete registration is received through the operation unit 13 and the like (Act 17). Here, when the instruction to complete registration is not received (Act 17; No), the control unit 11 causes the process to return to Act 13. That is, first captured images which are obtained by capturing of the first camera 31 and include the face regions of customers are temporarily stored in an order of an area of the face region, during a period in which a commodity is registered.

If the instruction to complete registration is received (Act 17; Yes), the control unit 11 generates accounting information based on the commodities registered until the instruction is received. Then, if an accounting device 20 (accounting device ID) as an accounting destination is designated (Act 18), the control unit 11 transmits the generated accounting information to the designated accounting information (Act 19). The accounting device 20 may be designated by receiving the accounting device 20 which is designated by an operation of a sales clerk or the control unit 11 may automatically designate the accounting device 20.

The control unit 11 compares features of a face region between first captured images which are temporarily stored, and thus identifies (recognizes) the same person (customer). Then, the control unit 11 specifies the face of a customer which shows most frequently among recognized customers (Act 20). For example, a customer (for example, customer who waits for his/her turn) other than a customer relating to a transaction may be included in first captured images obtained by capturing of the first camera 31. Thus, the control unit 11 separately recognizes a customer included in first captured images, and specifies a customer who shows most frequently, as a customer relating to a transaction in Act 20.

The control unit 11 selects a first captured image having the largest area of the face region of the customer specified in Act 20, among first captured images which include the face region of the person (Act 21). The control unit 11 transmits registration information to the management server 40 (Act 22). The registration information includes the first captured image selected in Act 21, an accounting device ID designated in Act 18, and a journal ID of the accounting information.

With the above processing, the registration device 10 can transmit a first captured image indicating features (face) of a customer, to the management server 40. Accordingly, it is possible to improve accuracy of recognizing a customer by using a first captured image.

Returning to FIG. 2, the second camera 32 is an image capturing device configured to capture an image of a customer who operates the accounting device 20. The second camera 32 is provided in each accounting device 20 (see FIG. 1). More preferably, the second camera 32 is provided at a position allowing an image of a face of the customer to be captured, in each accounting device 20. The accounting device 20 and the second camera 32 are connected to each other by a connection line L2. The position at which the second camera 32 is disposed is not particularly limited. The second camera 32 may be provided to be integrated with the accounting device 20 or may be provided in, for example, the ceiling of the store in a form of a monitoring camera, and the like.

The accounting device 20 is a commodity data processing device configured to perform accounting processing based on accounting information which is transmitted from the registration device 10. The accounting device 20 cooperates with the second camera 32, so as to transmit a captured image (referred to as a second captured image below) obtained during the accounting processing, to the management server 40.

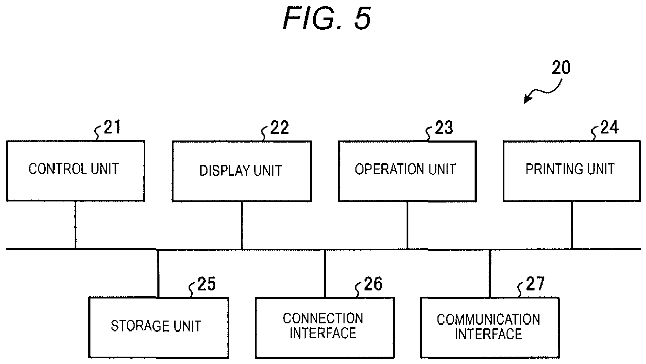

FIG. 5 is a diagram illustrating an example of a configuration of the accounting device 20. As illustrated in FIG. 5, the accounting device 20 includes a control unit 21. The control unit 21 has computer components such as a CPU or a SoC, a ROM, and a RAM.

A display unit 22, an operation unit 23, a printing unit 24, a storage unit 25, a connection interface 26, a communication interface 27, and the like are connected to the control unit 21 through a bus and the like.

The display unit 22 has a display device such as a liquid crystal display. The display unit 22 displays various types of information such as accounting information, under control of the control unit 21. The operation unit 23 includes various types of operation keys or pointing devices. The operation unit 23 receives an operation of an operator (customer). For example, the operation unit 23 includes an operation key and the like for an instruction to start or complete accounting processing. The operation unit 23 may be a touch panel provided on a display surface of the display unit 22.

The printing unit 24 is a printing device such as a thermal printer. The printing unit 24 prints details and the like of accounting (accounting information) on a sheet medium such as a receipt sheet, under control of the control unit 21. The storage unit 25 is a storage device such as a HDD or a flash memory. The storage unit 25 stores a program executed by the control unit 21 and various types of data used when the program is executed.

The connection interface 26 is an interface which is connectable to the second camera 32. The connection interface 26 receives a second captured image input from the second camera 32. The communication interface 27 is a communication interface which is connectable to the network N1. The communication interface 27 transmits and receives various types of information to and from an external device (for example, registration device 10 and management server 40) which is connected to the network N1.

Although not illustrated, a money deposit machine which receives input coins or bills, a money withdrawal machine which dispenses changes, and the like are connected to the control unit 21 through the bus and the like.

In the accounting device 20 having the above configuration, the control unit 21 causes accounting information transmitted from the registration device 10 to be temporarily stored in the RAM, and waits for an instruction to start accounting processing relating to the accounting information. If a customer moves to the accounting device 20 designated by a sales clerk at the registration device 10, the customer performs an instruction to start the accounting processing through the operation unit 23. The control unit 21 controls the second camera 32 to start capturing, and transmits a second captured image obtained by capturing of the second camera 32 to the management server 40, in accordance with the instruction to start accounting processing. The control unit 21 performs or inhibits the accounting processing based on response information from the management server 40. An operation of the accounting device 20 will be described below.

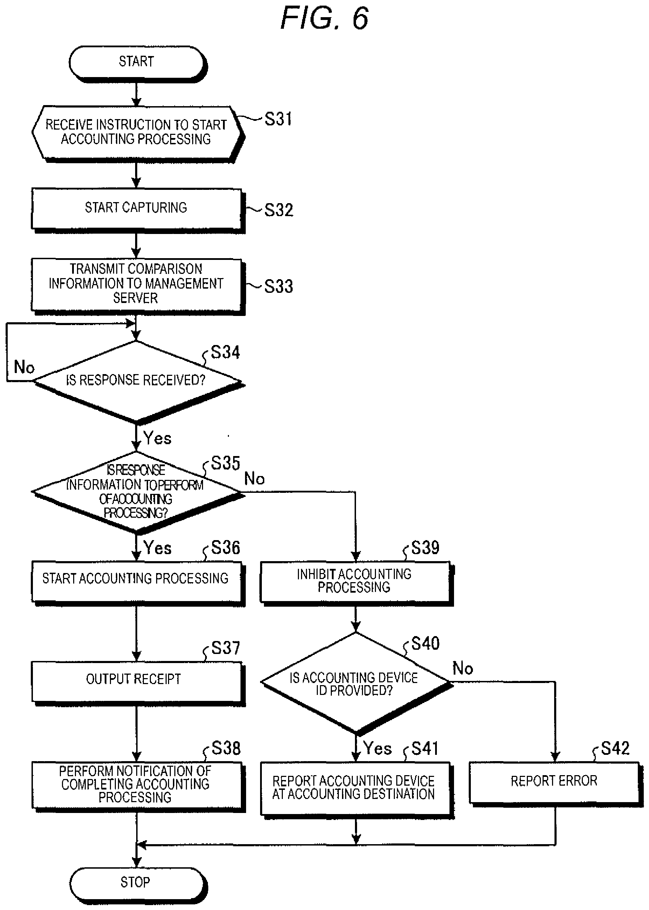

FIG. 6 is a flowchart illustrating an example of processing performed by the accounting device 20. Firstly, if the control unit 21 receives an instruction to start accounting processing through the operation unit 23 (Act 31), the control unit 21 causes the second camera 32 to start image capturing (Act 32). Then, the control unit 21 transmits comparison information to the management server 40 (Act 33). The comparison information includes the second captured image obtained by capturing of the second camera 32, and identification information for identifying the accounting device 20 itself. The control unit 21 may perform selection processing in a manner similar to that in the registration device 10, when the control unit 21 transmits the second captured image. Specifically, the control unit 21 may perform processing of Acts 13 to 16, and Acts 20 and 21 illustrated in FIG. 4, and thus may select a second captured image to be transmitted, based on the area of a face region or a showing frequency of a customer.

If the control unit 21 waits for a response from the management server 40 (Act 34; No) or receives response information (Act 34; Yes), the control unit 21 determines whether or not details of the received response information indicates an instruction to perform accounting processing (Act 35). When the received response information indicates an instruction to perform the accounting processing (Act 35; Yes), the control unit 21 starts the accounting processing based on accounting information which is temporarily stored in the RAM (Act 36). More specifically, the control unit 21 performs the accounting processing based on accounting information which corresponds to a journal ID included in the response information among pieces of accounting information which are temporarily stored in the RAM.

If the accounting processing is completed by depositing price of the commodity, the control unit 21 outputs a receipt indicating the details from the printing unit 24 (Act 37). The control unit 21 notifies the management server 40 to complete the accounting processing (Act 38), and ends this processing. The control unit 21 deletes the accounting information used in the accounting processing, from the RAM in accordance with the completion of the accounting processing.

When the response information indicates an instruction to inhibit the accounting processing in Act 35 (Act 35; No), the control unit 21 inhibits performing of the accounting processing (Act 39). Then, the control unit 21 determines whether or not the response information includes an accounting device ID (Act 40). When the response information includes an accounting device ID (Act 40; Yes), the control unit 21 reports an accounting device 20 indicated by an instruction of the accounting device ID as an accounting destination (Act 41), and the control unit 21 ends this processing.

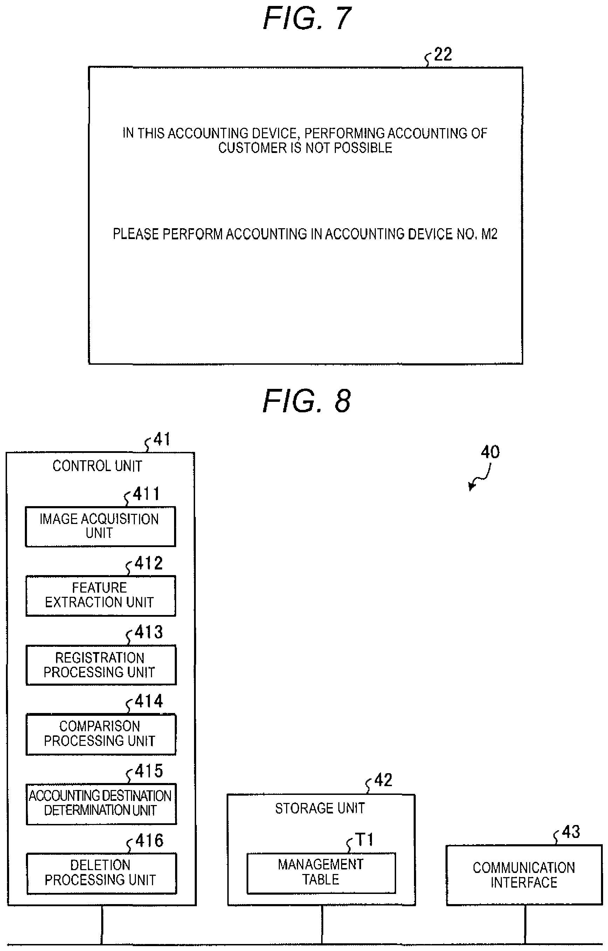

Here, as will be described later, the accounting device ID of which a notification is performed from the management server 40 corresponds to an accounting device 20 of which a sales clerk informs the customer of whom an image is captured by the second camera 32 as an accounting destination. That is, the accounting device ID means a right accounting device 20 to which accounting information for the customer is transmitted. The control unit 21 displays a report screen, for example, as illustrated in FIG. 7, in the display unit 22 in Act 41. Thus, the customer is promoted to move to the right accounting device 20.

FIG. 7 is a diagram illustrating an example of the report screen displayed in the display unit 22 of the accounting device 20. A message for promoting movement to the right accounting device 20 (accounting device ID is M2) is displayed on the report screen in FIG. 7, along with a message indicating that performing accounting is not possible. Thus, the customer recognizes the report screen, and thus can easily understand that the current accounting device 20 is erroneous and understand the right accounting device 20 as an accounting destination. The report screen is not limited to the example in FIG. 7.

When the response information does not include an accounting device ID in Act 40 (Act 40; No), the control unit 21 reports an occurrence of an error (Act 42) and ends this processing. Here, a case where the response information does not include an accounting device ID means that an image of the customer is not captured in the registration device 10, as will be described later. That is, the case means that registration of a commodity is not performed in the registration device 10 and the customer has no relation with accounting processing. The control unit 21 displays a report screen indicating the occurrence of an error in the display unit 22 in Act 42. The report screen displayed in Act 42 is not particularly limited. For example, a message for informing that the customer is not a person concerned with accounting or a message for promoting separating from the accounting device 20 may be displayed.

The control unit 21 may perform a report to a sales clerk in Act 41 and Act 42. In this case, a reporting method is not particularly limited, and various methods may be applied. For example, the control unit 21 may transmit a message to the registration device 10 or an external device such as an information device held by a sales clerk, through the communication interface 27. The transmitted message is used for reporting that the customer exists a site which is out of the designated accounting device 20. The control unit 21 may drive a light emitting device or a sound output device (not illustrated), and thus report a sales clerk that the customer exists in a site which is out of the designated accounting device 20 by using light or sound. Thus, when the customer exists at an erroneous accounting device 20 which is not the designated accounting device 20, the control unit 21 may report a message regarding this to the customer and a sales clerk. Accordingly, the sales clerk guides the right accounting device 20 to the customer, and thus it is possible to achieve more improvement of convenience.

Returning to FIG. 2, the management server 40 is a server apparatus that manages accounting processing of a customer, which is performed in the accounting device 20, based on captured images obtained by capturing of the first camera 31 and the second camera 32. The management server 40 will be described below.

FIG. 8 is a diagram illustrating an example of a configuration of the management server 40. As illustrated in FIG. 8, the management server 40 includes a control unit 41. The control unit 41 has computer components such as a CPU or a SoC, a ROM, and a RAM.

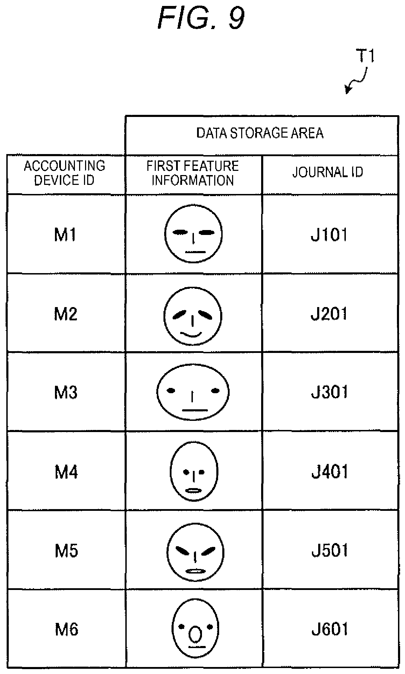

A storage unit 42 is connected to the control unit 41 through a bus and the like. The storage unit 42 is a storage device such as a HDD or a flash memory, The storage unit 42 stores a program executed by the control unit 41 and various types of data used when the program is executed. The storage unit 42 stores a management table T1 (see FIG. 9) for managing an accounting destination of a customer for whom registration of a commodity is completed in the registration device 10.

A communication interface (I/F) 43 is connected to the control unit 41 through the bus and the like. The communication interface 43 is connected to the network N 1, so as to transmit and receive various types of information to and from other devices (registration device 10, accounting device 20, and the like).

As illustrated in FIG. 8, the control unit 41 includes functional units of, for example, an information reception unit 411, a feature extraction unit 412, a registration processing unit 413, a comparison processing unit 414, an accounting destination determination unit 415, and a deletion processing unit 416. The above functional units are realized in a form of software, by executing a program stored in the storage unit 42 or are realized in a form of hardware, by using a dedicated processor and the like included in the control unit 41.

The information reception unit 411 receives various types of information transmitted from the registration device 10 and the accounting device 20, through the communication interface 43. More specifically, the information reception unit 411 receives registration information transmitted from each registration device 10. The information reception unit 411 receives comparison information transmitted from each accounting device 20.

The feature extraction unit 412 extracts feature information from captured images (first captured image and second captured image) which are respectively included in the registration information and the comparison information received by the information reception unit 411. The feature information indicates features of a person (customer) of whom an image is included in the captured images. Here, the feature information corresponds to, for example, a feature amount indicating features of a face region included in the captured image. Detecting a face region may be not possible, for example, because a person in the captured image wears sunglasses, a mask, or the like, In such a case, the feature extraction unit 412 extracts features of an element, as the feature information. The feature extraction unit 412 performs extraction from other elements such as clothes, a hairstyle, and a body type of the person. Feature information extracted from the first captured image is referred to as first feature information below. Feature information extracted from the second captured image is referred to as second feature information below. A method of extracting feature information is not particularly limited, and may use well-known technologies such as facial recognition or image recognition.

The registration processing unit 413 is a functional unit for registering a customer who performs accounting, in the management table T1. More specifically, the registration processing unit 413 registers first feature information extracted from a first captured image by the feature extraction unit 412, in the management table T1.

Here, FIG. 9 is a diagram illustrating an example of a data structure of the management table T1. As illustrated in FIG. 9, the management table T1 correlates an accounting device ID corresponding to each accounting device 20 with data storage regions for storing first feature information and a journal ID, and stores a result of the correlation. Here, M1 to M6 indicate accounting device IDs of six accounting devices 20 illustrated in FIG. 1.

The registration processing unit 413 registers (stores) first feature information which is extracted from a first captured image included in registration information, and a journal ID included in the registration information, in the data storage regions for an accounting device ID included in the registration information. The number of data storage regions correlated with an accounting device ID is not limited to one, a plurality of data storage regions may be correlated.

Returning to FIG. 8, the comparison processing unit 414 compares a second captured image to each of first captured images, and specifies a first captured image including an image of a customer who is the same as a customer of whom an image is included in the second captured image. More specifically, the comparison processing unit 414 compares second feature information extracted from a second captured image to each piece of first feature information registered in the management table T1. The comparison processing unit 414 specifies first feature information indicating features of a customer who is the same as a customer having features shown in the second feature information.

Specifically, the comparison processing unit 414 calculates similarity of the second feature information to each piece of the first feature information, and determines whether or not first feature information of which similarity is equal to or more than a threshold is existed. When first feature information of which the similarity is equal to or more than the threshold is existed, the comparison processing unit 414 determines that a customer corresponding to the first feature information is the same person as a customer corresponding to the second captured image. Here, comparison between pieces of feature information or determination of similarity may be performed by using well-known technologies such as face authentication or pattern recognition. When plural pieces of first feature information of which the similarity is equal to or more than the threshold are existed, the comparison processing unit 414 specifies one piece of first feature information having highest similarity.

The accounting destination determination unit 415 determines whether or not an accounting device ID which is correlated with the first feature information specified by the comparison processing unit 414 coincides with an accounting device ID included in comparison information. Here, the accounting destination determination unit 415 determines that an accounting device 20 which transmits the comparison information is an accounting destination of the customer, under a condition that the accounting device IDs coincide with each other. In this case, the accounting destination determination unit 415 transmits response information to the accounting device 20 which transmits the comparison information. The response information includes control information for an instruction to start accounting processing, and a journal ID which is correlated with the first feature information specified by the comparison processing unit 414.

The accounting destination determination unit 415 determines that the accounting device 20 which transmits the comparison information is not an accounting destination of the customer, under a condition that the accounting device IDs do not coincide with each other. In this case, the accounting destination determination unit 415 transmits response information to the accounting device 20 which transmits the comparison information. The response information includes control information for an instruction to inhibit accounting processing, and an accounting device ID which is correlated with the first feature information specified by the comparison processing unit 414.

The accounting destination determination unit 415 determines that a customer of the accounting device 20 which transmits the comparison information has no relation with accounting processing, under a condition that it is not possible that the comparison processing unit 414 specifies first feature information corresponding to the second feature information. In this case, the accounting destination determination unit 415 transmits response information to the accounting device 20 which transmits the comparison information. The response information includes control information for an instruction to inhibit accounting processing.

The deletion processing unit 416 is a functional unit configured to delete first feature information and a journal ID which are registered in the management table T1. Specifically, if the accounting destination determination unit 415 transmits response information for an instruction to start accounting processing to the accounting device 20, the deletion processing unit 416 clears a data storage region in which a journal ID included in the response information is stored. The deletion processing unit 416 may delete first feature information and a journal ID which relate to accounting processing, in accordance with a completion notification of the accounting processing from the accounting device 20.

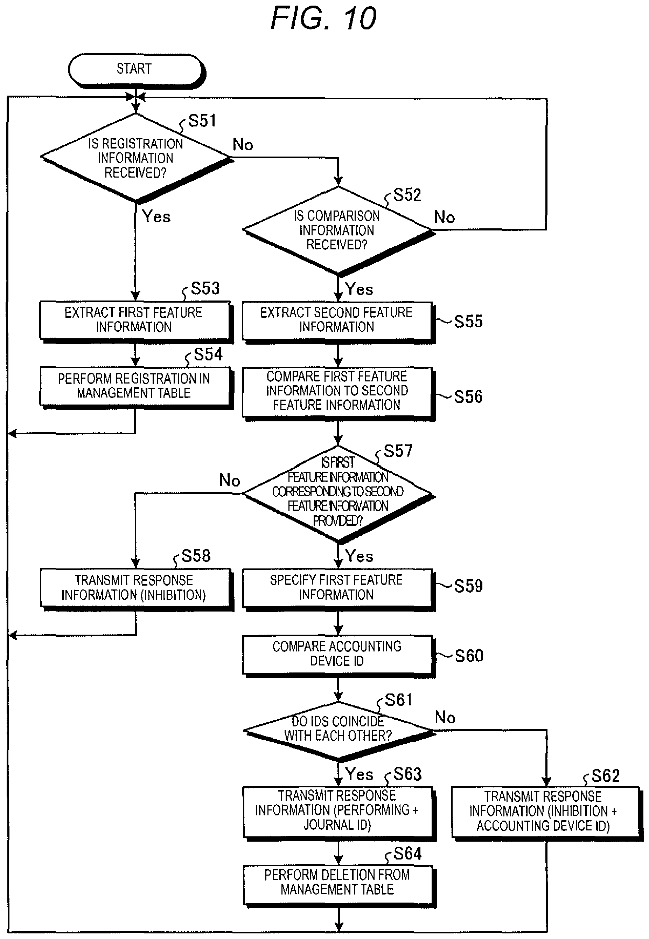

An operation of the management server 40 having the above-described configuration will be described below. FIG. 10 is a flowchart illustrating an example of processing performed by the management server 40.

Firstly, the information reception unit 411 waits until registration information or comparison information is transmitted (Act 51; No → Act 52; No). The feature extraction unit 412 extracts first feature information from a first captured image included in registration information, under a condition that the information reception unit 411 receives the registration information (Act 51; Yes) (Act 53).

The registration processing unit 413 associates the extracted first feature information and a journal ID included in the registration information with an accounting device ID included in the registration information, and registers a result of the association in the management table T1 (Act 54). The registration processing unit 413 causes the process to return to Act 51.

The feature extraction unit 412 extracts second feature information from a second captured image included in comparison information, under a condition that the information reception unit 411 receives the comparison information (Act 51; No → Act 52; Yes) (Act 55). The comparison processing unit 414 compares the extracted second feature information to each piece of first feature information registered in the management table T1 (Act 56).

As a result of the comparison, when there is no first feature information indicating features of the same person as a person having features in the second feature information (Act 57; No), the accounting destination determination unit 415 transmits response information to the accounting device 20 which transmits the comparison information (Act 58). The response information is used for an instruction to inhibit accounting processing. The accounting destination determination unit 415 causes the process to return to Act 51.

As a result of the comparison, when first feature information indicating features of the same person as a person having features in the second feature information is existed (Act 57; Yes), the comparison processing unit 414 specifies the first feature information (Act 59). Then, the accounting destination determination unit 415 compares an accounting device ID corresponding to the specified first feature information to an accounting device ID included in the comparison information, so as to determine whether or not the accounting device IDs coincide with each other (Act 60).

Here, the accounting destination determination unit 415 transmits response information for an instruction to inhibit accounting processing, to the accounting device 20 which transmits the comparison information, under a condition that the accounting device IDs do not coincide with each other (Act 61; No) (Act 62). More specifically, the accounting destination determination unit 415 transmits response information to the accounting device 20. The response information includes control information for an instruction to inhibit accounting processing, and an accounting device ID corresponding to the specified first feature information. Then, the comparison processing unit 414 causes the process to return to Act 51.

The accounting destination determination unit 415 transmits response information for an instruction to perform accounting processing, to the accounting device 20 which transmits the comparison information, under a condition that the accounting device IDs coincide with each other (Act 61; Yes) (Act 63). More specifically, the accounting destination determination unit 415 transmits response information which includes control information for an instruction to perform accounting processing, and a journal ID corresponding to the specified accounting device ID, to the accounting device 20.

The deletion processing unit 416 deletes a set of the first feature information specified in Act 59 and the journal ID corresponding to the first feature information, from the management table T1 (Act 64), and causes the process to return to Act 51. The deletion processing unit 416 may perform the process of Act 64 in accordance with a completion notifcation from the accounting device 20.

As described above, in the checkout system according to the embodiment, when a customer who performs accounting of a commodity performs an instruction to start accounting processing in an accounting device 20 which is different from the designated accounting device 20, performing the accounting processing is inhibited. Thus, even when an accounting device 20 receives an instruction to start accounting processing from a customer, if the accounting device 20 is different from the designated accounting destination, the accounting processing is not performed, and thus it is possible to prevent accounting processing from being performed with erroneous accounting information.

In the checkout system according to the embodiment, when a customer who performs accounting of a commodity performs an instruction to start accounting processing in an accounting device 20 which is different from the designated accounting device 20, the customer is informed of a right accounting device 20 as an accounting destination. Thus, in the accounting device 20, when a customer moves to an accounting device 20 which is different from the designated accounting device 20, the customer can move to a right accounting device 20 based on reported information (report screen). Accordingly, it is possible to improve convenience for a customer.

In the checkout system according to the embodiment, when a person having no relation other than a customer who performs registration of a commodity in the registration device 10 performs an instruction to start accounting processing in the accounting device 20, performing the accounting processing is inhibited, and the occurrence of an error is reported. Thus, in the accounting device 20, when an instruction to start accounting processing is received from a person having no relation, performing the accounting processing can be inhibited, and the occurrence of an error can be reported. Accordingly, it is possible to prevent erroneous accounting processing from being performed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

For example, in the above embodiment, the accounting device 20 transmits comparison information to the management server 40 under a condition that an instruction to start accounting processing is received. However, the accounting device 20 may transmit the comparison information before the instruction to start accounting processing is received. In this case, for example, if the control unit 21 detects a face region from a second captured image of the second camera 32, the control unit 21 transmits comparison information including the second captured image, to the management server 40. Thus, the accounting device 20 can transmit comparison information ahead of an instruction to start accounting processing.

In the above embodiment, the management server 40 (registration processing unit 413) registers and manages first feature information extracted from a first captured image, in the management table T1. However, it is not limited to the above embodiment, and the first captured image may be registered and managed in the management table T1. In this case, the feature extraction unit 412 cooperates with the comparison processing unit 414, and thus extracts first feature information from each of first captured images when comparison to a second captured image is performed.

In the above embodiment, the management server 40 manages accounting processing performed by each accounting device 20. However, it is not limited to the above embodiment, and another device may perform management. For example, one representative device of the registration device 10 and the accounting device 20 may include the functions of the management server 40, and thus may manage accounting processing performed in each accounting device 20. The management server 40 may include the functions of the management table T1, the information reception unit 411, the feature extraction unit 412, the registration processing unit 413, and the deletion processing unit 416, and each accounting device 20 may include the functions of the comparison processing unit 414 and the accounting destination determination unit 415. Thus, an individual accounting device 20 may determine whether or not performing accounting processing is possible.

In the above embodiment, the registration device 10 and the accounting device 20 transmit captured images. However, it is not limited to the above embodiment, and each of the cameras may directly perform transmission.

## Claims

1. A management device, comprising:
managing means for correlating and managing a first captured image with an accounting device identifier of one accounting device designated so as to perform accounting processing of a registered commodity among accounting device identifiers for respectively identifying a plurality of accounting devices, the first captured image comprising an image of a customer who asks a sales clerk operating a registration device to register a commodity;
specifying means for comparing a second captured image comprising an image of a customer who operates the accounting device to each first captured image managed by the managing means, and specifying the first captured image including an image of the customer who is the same as the customer of whom an image is included in the second captured image, when the accounting device starts the accounting processing;
determining means for determining whether an accounting device identifier corresponding to the first captured image which is specified by the specifying means coincides with an accounting device identifier of the accounting device operated by the customer of whom an image is included in the second captured image; and
control means for inhibiting the accounting processing which is performed in the accounting device operated by the customer of whom an image is included in the second captured image, under a condition that the determining means determines the identifiers not to coincide.

2. The device according to claim 1,
wherein the control means notifies the accounting device operated by the customer of whom an image is included in the second captured image of the accounting device identifier corresponding to the first captured image which is specified by the specifying means, under the condition that the determining means determines the identifiers not to coincide.

3. The device according to claim 1 or 2,
wherein the control means inhibits the accounting processing performed in the accounting device operated by the customer of whom an image is included in the second captured image, under a condition that the specifying means is not able to specify the first captured image.

4. The device according to any one of claims 1 to 3,
wherein the control means causes the accounting device operated by the customer of whom an image is included in the second captured image to perform the accounting processing, under the condition that the determining means determines the identifiers to coincide.

5. The device according to claim 4,
wherein the managing means correlates and manages an accounting identifier for identifying accounting of the customer of whom an image is included in the first captured image, with the first captured image and the accounting device identifier, and
the control means notifies the accounting device operated by the customer of whom an image is included in the second captured image, of the accounting identifier corresponding to the first captured image which is specified by the specifying means, under the condition that the determining means determines the identifiers to coincide.

6. The device according to any one of claims 1 to 5, further comprising:
a first camera for obtaining the first captured image.

7. The device according to any one of claims 1 to 6, further comprising:
a second camera for obtaining the second captured image.

8. The device according to any one of claims 1 to 7,
wherein the determining means uses facial recognition.

9. A management method comprising:
managing a first captured image in correlation with an accounting device identifier of one accounting device designated so as to perform accounting processing of a registered commodity among accounting device identifiers for respectively identifying a plurality of accounting devices, the first captured image comprising an image of a customer who asks a sales clerk operating a registration device to register a commodity;
comparing a second captured image comprising an image of a customer who operates the accounting device to each first captured image managed in the managing, and specifying the first captured image including an image of the customer who is the same as the customer of whom an image is included in the second captured image, when the accounting device starts the accounting processing;
determining whether an accounting device identifier corresponding to the first captured image which is specified in the specifying coincides with an accounting device identifier of the accounting device operated by the customer of whom an image is included in the second captured image; and
inhibiting the accounting processing which is performed in the accounting device operated by the customer of whom an image is included in the second captured image, under a condition that the identifers are determined not to coincide in the determining.

10. The method according to claim 9, further comprising:
notifying the accounting device operated by the customer of whom an image is included in the second captured image of the accounting device identifier corresponding to the first captured image which is specified by the specifying means, under the condition that the determining means determines the identifiers not to coincide.

11. The method according to claim 9 or 10, further comprising:
inhibitting the accounting processing performed in the accounting device operated by the customer of whom an image is included in the second captured image, under a condition that the specifying means is not able to specify the first captured image.

12. The method according to any one of claims 9 to 11, further comprising:
causing the accounting device operated by the customer of whom an image is included in the second captured image to perform the accounting processing, under the condition that the determining means determines the identifiers to coincide.

13. The method according to claim 12, further comprising:
correlating and managing an accounting identifier for identifying accounting of the customer of whom an image is included in the first captured image, with the first captured image and the accounting device identifier, and
notifying the accounting device operated by the customer of whom an image is included in the second captured image, of the accounting identifier corresponding to the first captured image which is specified by the specifying means, under the condition that the determining means determines the identifiers to coincide.

14. A management system, comprising:
at least one image capture component;
at least one POS terminal; and
the management device according to any one of claims 1 to 8.
